# EUROPEAN PATENT APPLICATION

(11) **EP 4 746 476 A1**
(43) Date of publication of application: **20.05.2026**
(21) Application number: 24841909.5
(22) Date of filing: 04.02.2024
(51) Int. Cl.: H04W 12/06

(54) **ACCESS METHOD, COMMUNICATION DEVICE, AND COMPUTER READABLE STORAGE MEDIUM**

(30) Priority: 19.07.2023 CN 202310892575
(71) Applicant: ZTE Corporation, Shenzhen, Guangdong 518057 (CN)
(72) Inventor: ZHANG, Kangjie, Shenzhen, Guangdong 518057 (CN); XIE, Feng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/075774
(87) International publication number: WO 2025/015902

(57) **Abstract**

An access method, a communication device, and a computer readable storage medium are provided. The access method includes: receiving indication information of a target transceiving node of a network, the indication information being configured to instruct a terminal to use a digital identity to request an access authority to the network on a target time-frequency resource; sending first request information on the target time-frequency resource in response to the indication information, the first request information including the digital identity of the terminal; receiving a network identity used for characterizing the access authority; and accessing the network by using the network identity.

## Description

This application claims priority of Chinese Patent Application No. 202310892575.8, filed on July 19, 2023, which is incorporated into this application by reference in its entirety.

### TECHNICAL FIELD

The present disclosure relates to the field of communication technologies, and in particular, to an access method, a communication device, and a computer readable storage medium.

### BACKGROUND

In communication technologies, terminals need to be authenticated to obtain access authorities before they access a network. Currently, authentication is achieved by a process in which a terminal and a network side jointly store a peer key to encrypt transmitted information and the two communication parties verify the encrypted information based on the peer key.

### SUMMARY

In an aspect, an access method is provided and applied to a terminal. The access method includes: receiving indication information of a target transceiving node of a network, the indication information being configured to instruct the terminal to use a digital identity to request an access authority to the network on a target time-frequency resource; sending first request information on the target time-frequency resource in response to the indication information, the first request information including the digital identity of the terminal; receiving a network identity used for characterizing the access authority; and accessing the network by using the network identity.

In another aspect, an access method is provided and applied to a target transceiving node of a network. The access method includes: sending indication information, the indication information being configured to instruct a terminal to use a digital identity to request an access authority to the network on a target time-frequency resource; receiving first request information of the terminal and sending second request information to a target authentication node of the network, the first request information and the second request information including the digital identity of the terminal; receiving a network identity, used for characterizing the access authority, sent by the target authentication node of the network, and sending the network identity to the terminal.

In yet another aspect, an access method is provided and applied to a target authentication node of a network. The access method includes: receiving second request information sent by a target transceiving node of the network; and sending, in a case where the second request information passes verification, a network identity used for characterizing an access authority to the network requested by a terminal to the target transceiving node of the network, so as to send the network identity used for characterizing the access authority to the terminal through the target transceiving node of the network.

In yet another aspect, a communication device is provided. The communication device includes a receiving module, a sending module, and an access module. The receiving module is configured to receive indication information of a target transceiving node of a network. The indication information is configured to instruct a terminal to use a digital identity to request an access authority to the network on a target time-frequency resource. The sending module is configured to send first request information on the target time-frequency resource in response to the indication information. The first request information includes the digital identity of the terminal. The receiving module is further configured to receive a network identity used for characterizing the access authority. The access module is configured to access the network by using the network identity.

In yet another aspect, a communication device is provided. The communication device includes a sending module and a receiving module. The sending module is configured to send indication information. The indication information is configured to instruct a terminal to use a digital identity to request an access authority to a network on a target time-frequency resource. The receiving module is configured to receive first request information of the terminal and send second request information to a target authentication node of the network. The first request information and the second request information include the digital identity of the terminal. The receiving module is further configured to receive a network identity, used for characterizing the access authority, sent by the target authentication node of the network, and send the network identity to the terminal.

In yet another aspect, a communication device is provided. The communication device includes a receiving module and a sending module. The receiving module is configured to receive second request information sent by a target transceiving node of a network. The sending module is configured to send, in a case where the second request information passes verification, a network identity used for characterizing an access authority to the network requested by a terminal to the target transceiving node of the network, so as to send the network identity used for characterizing the access authority to the terminal through the target transceiving node of the network.

In yet another aspect, a communication system is provided. The communication system includes a terminal, a target transceiving node of a network, and a target authentication node of the network. The target transceiving node of the network sends indication information to the terminal. The terminal sends first request information on a target time-frequency resource in response to the indication information. The first request information includes a digital identity of the terminal. The target transceiving node of the network sends a second request message to the target authentication node of the network after receiving the first request information of the terminal. The first request information and second request information include the digital identity of the terminal. In a case where the second request message passes verification, the target authentication node of the network sends a network identity used for characterizing an access authority to the network requested by the terminal to the target transceiving node of the network, so as to send the network identity used for characterizing the access authority to the terminal through the target transceiving node of the network. The terminal accesses the network by using the network identity after receiving the network identity.

In yet another aspect, a communication device is provided. The communication device includes a memory and a processor. The memory is coupled with the processor. The memory is configured to store a computer program. When the processor executes the computer program, the processor performs the access method described in any one of the aspects mentioned above.

In yet another aspect, a computer readable storage medium is provided. The computer readable storage medium has stored computer program instructions thereon. When the computer program instructions are executed by a processor, the access method described in any one of the aspects mentioned above is performed.

In yet another aspect, a computer program product is provided. The computer program product includes computer program instructions. When the computer program instructions are executed by a processor, the access method described in any one of the aspects mentioned above is performed.

### BRIEF DESCRIPTION OF THE DRAWINGS

In order to describe technical solutions in the present disclosure more clearly, the accompanying drawings to be used in some embodiments of the present disclosure will be introduced briefly below. However, the accompanying drawings to be described below are merely accompanying drawings of some embodiments of the present disclosure, and a person of ordinary skill in the art may obtain other drawings according to these drawings.
FIG. 1 is a schematic diagram showing a structure of a communication system, in accordance with some embodiments of the present disclosure;
FIG. 2 is a flow chart of an access method, in accordance with some embodiments of the present disclosure;
FIG. 3 is a flow chart of another access method, in accordance with some embodiments of the present disclosure;
FIG. 4 is a flow chart of yet another access method, in accordance with some embodiments of the present disclosure;
FIG. 5 is a flow chart of yet another access method, in accordance with some embodiments of the present disclosure;
FIG. 6 is a schematic diagram of an interaction of a communication method, in accordance with some embodiments of the present disclosure;
FIG. 7 is a schematic diagram of components of a communication device, in accordance with some embodiments of the present disclosure;
FIG. 8 is a schematic diagram of components of another communication device, in accordance with some embodiments of the present disclosure;
FIG. 9 is a schematic diagram of components of yet another communication device, in accordance with some embodiments of the present disclosure; and
FIG. 10 is a schematic diagram of components of yet another communication device, in accordance with some embodiments of the present disclosure.

### DETAILED DESCRIPTION

In order to enable those skilled in the art to better understand technical solutions in embodiments of the present disclosure, the technical solutions in the present disclosure will be described clearly and completely with reference to the accompanying drawings in the present disclosure. However, the described embodiments are merely some but not all of embodiments of the present disclosure. All other embodiments obtained based on the embodiments of the present disclosure by a person of ordinary skill in the art without paying any creative effort shall be included in the protection scope of the present disclosure.

It will be noted that, in the present disclosure, the term such as "exemplary" or "for example" is used to represent an example, illustration, or explanation. Any embodiment or design solution described herein with "exemplary" or "for example" in the present disclosure is not necessarily to be construed as preferred or advantageous over other embodiments or design solutions. Rather, the use of the term such as "exemplary" or "for example" is intended to present relevant concepts in a specific manner.

Hereinafter, the terms "first" and "second" are used for descriptive purposes only, and are not to be construed as indicating or implying a relative importance or implicitly indicating the number of indicated technical features. Thus, a feature defined with "first" or "second" may explicitly or implicitly include one or more of the features.

In the description of the present disclosure, unless otherwise specified, the symbol "/" means "or", for example, "A/B" may mean A or B. Herein, "and/or" is merely an associated relationship for describing associated objects, which means that there may be three relationships. For example, A and/or B may mean: only A, only B, and A and B at the same time. In addition, the term such as "at least one" means one or more, and the term such as "a/the plurality of" means two or more.

Terminals on a user side need to perform authentication to obtain access authorities when initially accessing a network. Currently, the authentication process includes the following: the terminal on the user side and the network side jointly have a peer key to encrypt some specific and random information, and then the terminal on the user side and the network side each verify whether the content encrypted by the other party is encrypted with the peer key, so that identities of both parties may be proved. The authentication of 5th-generation mobile communication technology authentication and key agreement (5G AKA) in some technologies includes conventional peer-to-peer key verification and digital certificate verification. Authentication processes of the peer-to-peer key verification and digital certificate verification are ultimately completed through encryption and decryption of a subscriber identification module (SIM) card. This method requires the terminal on the user side to obtain an access credential (SIM card) offline. The access credential includes the peer key required for network access authentication. The function of the authentication using the peer key is single, a peer key may be used for only a single authentication interface (i.e., used between a pair of communication nodes). In actual scenarios, the terminal generally is required to access different network nodes, that is, the terminal needs to store a plurality of identity credentials (peer keys), which greatly increases the possibility of identity credential leakage.

In addition, the terminal may also access a network by means of a digital certificate. The basic authentication steps in this manner are similar to those of the SIM card. A user obtains a digital certificate with a network access authority in advance, and provides the digital certificate to the network side when accessing the network. If the network side verifies that the digital certificate is valid, the user may access the network.

It may be seen that the both manners require a credential (the peer key or digital certificate) to be preset in a physical device, and the credential has a single function and may be used for only a single authentication interface (i.e., used between a pair of communication nodes). In actual scenarios, the terminal generally is required to access different network nodes, that is, the user needs to store a plurality of credentials to meet daily requirements, which increases the requirements on the device performance and the difficulty of avoiding credential leakage.

In an aspect, a unified data management (UDM) network element needs to serve millions of users, which easily causes channel congestion and a sharp increase in latency during peak hours. If the latency of the authentication process is excessively long, the entire process is required to be reinitiated. If the UDM malfunctions, the entire network will be paralyzed. In another aspect, both peer key and digital certificate are required to be physically written offline, and the user need to store a variety of keys or digital certificates for a variety of application scenarios. In conclusion, there is an urgent need for a method that enables multi-party network access authentication based on a single identity.

Based on this, an access method is provided in embodiments of the present disclosure. In this access method, a terminal receives indication information of a target transceiving node of a network, and then sends first request information including a digital identity, to obtain a network identity characterizing an access authority, and uses the network identity to access the network. Since the digital identity is certified by an authoritative authority, the digital identity serves as a personal identification document for a user, ensuring that an individual may be traced based on the digital identity. In this way, the terminal needs to adopt only one digital identity, and different nodes in the network may perform authentication on the terminal based on the digital identity. In this way, there is no need for the terminal to store a plurality of credentials, thereby effectively reducing the possibility of key leakage.

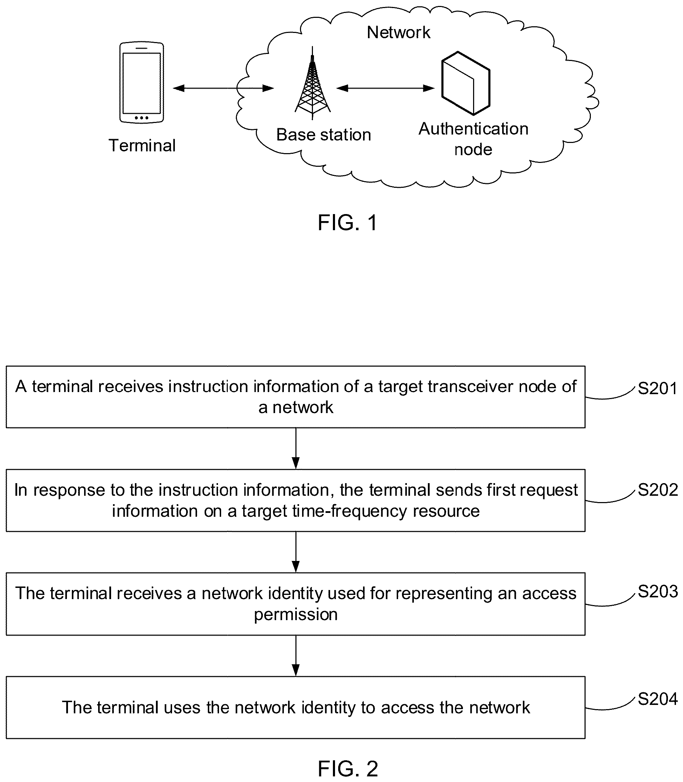

FIG. 1 is a schematic diagram showing a structure of a communication system, in accordance with some embodiments of the present disclosure. As shown in FIG. 1, the communication system includes a terminal, a transceiving node (also referred to as a base station), and an authentication node. The transceiving node and the authentication node belong to the same public land mobile network (PLMN). For ease of description, the relationship between the transceiving node and the authentication node may be simply referred to as belonging to the same network hereinafter. The transceiving node may be connected to the terminal through a wireless network, while the transceiving node may be connected to the authentication node through a wired network. The wireless network may be supported by routers, switches, or other devices that facilitate communication between a base station and a terminal, and the embodiments of the present disclosure are not limited thereto.

In some embodiments, the base station is configured to provide a wireless access service to a terminal. For example, a base station provides a service coverage area (also referred to as a cell). Terminals entering this area may communicate with the base station through wireless signals, so as to receive wireless access services provided by the base station. In addition, the service coverage area of the base station may also be divided into a near field and a far field. The terminal may be located within the near field or within the far field.

In some embodiments, the base station may be a millimeter wave base station, an evolution node B (eNB), a next generation node B (gNB), a transmission and receiving point (TRP), a transmission point (TP), or some other access nodes. The base station may also be classified, according to a size of the provided service coverage area, into a macro base station for providing a macro cell, a micro base station for providing a pico cell, and a femto base station for providing a femto cell. With the continuous evolution of wireless communication technologies, other names for future base stations may be also adopted.

In some embodiments, the authentication node may be an authentication server function (AUSF) network element. The AUSF network element is configured to receive an identity authentication request from a terminal, so as to perform authentication.

In some embodiments, in the communication system shown in FIG. 1, the network may also include an access and mobility management function (AMF) network element (not shown in the figure). The AMF network element is connected to the base station on a side of the AMF network element and to the AUSF network element on another side of the AMF network element. The AMF network element is configured to acquire the identity authentication request from the terminal sent by the base station and forward the request to the AUSF network element for authentication of the terminal identity.

In some embodiments, the terminal may be a device with a wireless transceiving function, such as a mobile phone, a tablet computer, a wearable device, a vehicle-mounted device, an augmented reality (AR)/virtual reality (VR) device, a notebook computer, an ultra-mobile personal computer (UMPC), a netbook, or a personal digital assistant (PDA). The embodiments of the present disclosure do not limit the types of terminals.

It will be understood that FIG. 1 is an exemplary structural diagram, and the number of devices included in the communication system shown in FIG. 1 is not limited, such as the number of base stations and the number of terminals. Moreover, in addition to the devices shown in FIG. 1, the communication system shown in FIG. 1 may further include other devices, which is not limited.

FIG. 2 is a flow chart of an access method, in accordance with some embodiments of the present disclosure. For example, the access method provided in the present disclosure may be applied to the communication system shown in FIG. 1, such as the terminal in FIG. 1.

As shown in FIG. 2, the access method provided in the present disclosure may, for example, include the following S201 to S204.

In S201, a terminal receives indication information of a target transceiving node of a network.

The indication information may also referred to as digital-id-access-guide information and be configured to instruct the terminal to use a digital identity to request an access authority to the network on a target time-frequency resource.

For the S201, since the terminal does not have the access authority to the network before accessing the network for the first time, the authentication is required to obtain the access authority to the network. The access authority may be, for example, a network identity (corresponding to a new number applied for in the conventional solution). In the embodiments of the present disclosure, the terminal has a digital identity issued by a legitimate certification authority, and the digital identity may be a digital certificate or a decentralized identity (DID).

In a case where the terminal is required to access the network, the terminal may receive the indication information of the transceiving node of the network. The indication information instructs the network to use the digital identity to request the access authority to the network on the target time-frequency resource.

In some embodiments, the indication information is carried in system information block (SIB) signaling. For example, in a case where a terminal actively requests the indication information, the indication information may be carried in undefined SIB 20 signaling. For another example, in a case where a base station actively broadcasts the indication information, the indication information may be carried in SIB 1 signaling. In addition, the indication information may also be carried in newly defined broadcast information and independent of access processes in some technologies, and the embodiments of the present disclosure are not limited thereto.

In S202, in response to the indication information, the terminal sends first request information on the target time-frequency resource.

The first request information includes the digital identity of the terminal.

For the S202, the terminal receives the indication information sent by the transceiving node of the network, and then the terminal may, in response to the indication information, send the first request information carrying the digital identity of the terminal on the target time-frequency resource indicated in the indication information, so as to request the access authority.

In some embodiments, the indication information includes first certification information (also referred to as digital-id-certification), and the first certification information is used for verifying validity of the digital identity of the terminal. The first request information further includes second certification information. The second certification information is the first certification information after being encrypted.

In some embodiments, the second certification information is the first certification information encrypted with a private key corresponding to the digital identity of the terminal.

In some embodiments, the first certification information may change over time to avoid potential authentication security risks caused by the information replied by the terminal being intercepted by malicious users.

In some embodiments, the indication information is further configured to instruct the terminal to send relevant information for access (or referred to as digital-id-access-requirement information), and the first request information further includes the relevant information.

The relevant information includes at least one of: a type of the digital identity, a content of the digital identity, information about a blockchain related to the digital identity, and a fee payment method. The type of the digital identity may be configured to indicate whether the terminal sends a digital certificate or a DID. The content of the digital identity refers to the information that will be included in the digital identity, such as an identity identifier of the terminal. The information about the blockchain related to the digital identity may be configured to indicate whether the digital identity has been uploaded to the blockchain. If the digital identity has been uploaded to the blockchain, the information about the blockchain related to the digital identity also indicates a blockchain number to which the digital identity is uploaded. In addition, since the present disclosure uses the digital identity instead of the SIM card for authentication, a fee payment method for a phone bill may be negotiated. The fee payment method may indicate that the payment is made by linking a blockchain account or by using other payment linking methods. In addition, the relevant information may also define an encryption type, and the encryption type may be used for encrypting and decrypting the network identity sent in the future.

It will be noted that if the fee payment method is not defined in the relevant information, a payment negotiation mechanism may be defined. The process of defining the payment negotiation mechanism may be performed in the S202 or after the digital identity of the terminal is verified as described below.

In S203, the terminal receives a network identity used for characterizing the access authority.

For the S203, after sending the first request message, the terminal may receive the network identity (network-id) sent by the target authentication node of the network through the target transceiving node. The network identity characterizes the access authority.

In some embodiments, the received network identity is a network identity encrypted with a public key corresponding to the digital identity, that is, the target authentication node encrypts the network identity before sending the network identity to the terminal. In this way, it is possible to avoid potential security risks caused by the network identity being intercepted by malicious users. Furthermore, the terminal may use the private key corresponding to the digital identity to decrypt the received network identity, so as to obtain the actual network identity for subsequent network access.

In some other embodiments, the received network identity is a network identity encrypted by a preset encryption method. The preset encryption method may be an encryption method indicated by the encryption type in the relevant information in the S202, or the preset encryption method may be an encryption method negotiated by the terminal and the target authentication node of the network after the digital identity passes the following verification, and the embodiments of the present disclosure are not limited thereto.

In S204, the terminal accesses the network by using the network identity.

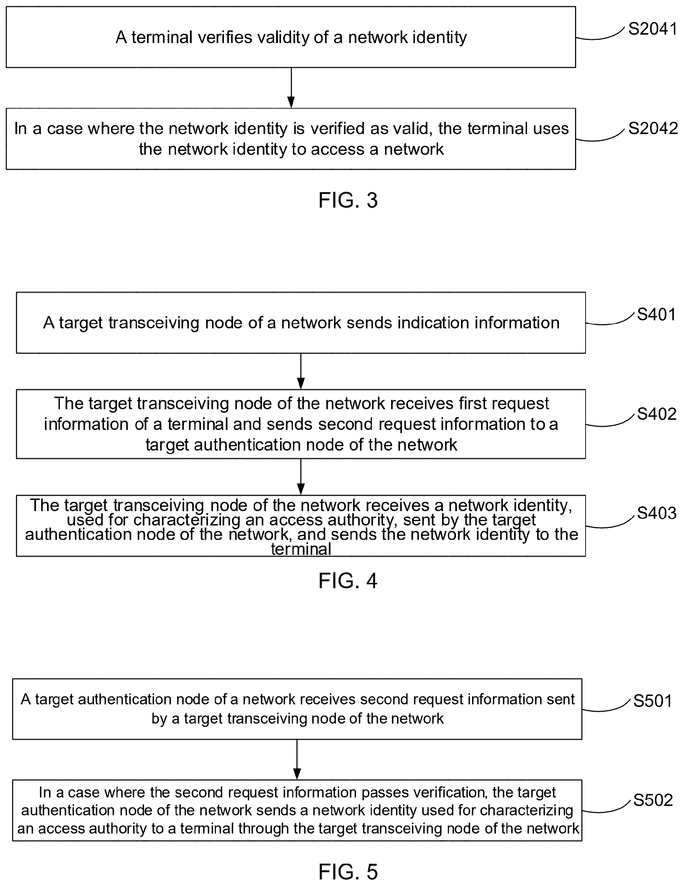

In some embodiments, as shown in FIG. 3, the S204 may, for example, be implemented as following S2041 and S2042.

In S2041, the terminal verifies validity of the network identity.

In S2042, in a case where the network identity is verified as valid, the terminal uses the network identity to access the network.

It will be understood that there is a possibility that the base station may be subjected to unauthorized occupation. Therefore, the network identity obtained by the terminal through the target transceiving node may be a fake network identity sent by the target transceiving node that has been subjected to unauthorized occupation. If the terminal accesses the network without verifying the validity of the network identity, a significant security vulnerability exists. Therefore, the terminal may further verify the validity of the network identity through the following two implementation manners after receiving the network identity. In a case where the network identity is verified as valid, the terminal uses the network identity to access the network.

In an implementation manner, the terminal may verify the validity of the network identity based on a target valid terminal. The target valid terminal is a terminal passing verification of the target authentication node and belonging to the terminals managed by other transceiving nodes in the network except the target transceiving node. The target authentication node is a node in the network that issues the network identity. In other words, the terminals may grant the network identities to the same authentication node (i.e., the target authentication node), but each of the terminal sends, through a different base station, authentication certification information to other terminals accessing the network. The validity of the network identity is determined by determining whether these terminals receive the authentication certification information. For example, if receiving the response information fed back by other terminals, the terminal may determine that the other terminals have received the authentication certification information.

In another implementation manner, in a case where the target authentication node of the network has a digital identity, the terminal verifies the validity of the network identity based on the digital identity of the target authentication node. For example, the terminal may send certification information to the target authentication node through the target transceiving node. The target authentication node uses a private key corresponding to its own digital identity to encrypt the certification information, and then the target authentication node feeds back the encrypted certification information to the terminal. The terminal acquires a public key of a granting authority and decrypts the digital identity of the target authentication node, so as to obtain a public key corresponding to the digital identity of the target authentication node. Then, the terminal uses the public key to decrypt the certification information, and determines whether the decrypted certification information is the same as the original certification information, thereby determining the validity of the network identity.

FIG. 4 is a flow chart of yet another access method, in accordance with some embodiments of the present disclosure. For example, the access method provided in the present disclosure may be applied to the communication system shown in FIG. 1, such as the transceiving node of the network in FIG. 1.

As shown in FIG. 4, the access method provided in the present disclosure may, for example, include the following S401 to S403.

In S401, the target transceiving node of the network sends indication information.

The indication information is configured to instruct a terminal to use a digital identity to request an access authority to the network on a target time-frequency resource.

For the S401, the target transceiving node of the network may send the indication information to the terminal after receiving a request of the terminal, so as to instruct the terminal to request the access authority; alternatively, the target transceiving node of the network may broadcast the indication information to all terminals managed by the target transceiving node, so as to instruct a terminal with an access requirement to request the access authority.

In S402, the target transceiving node of the network receives first request information of the terminal and sends second request information to a target authentication node of the network.

The first request information and second request information include the digital identity of the terminal.

For the S402, the terminal may send the first request information to the target transceiving node of the network after receiving the indication information. The target transceiving node of the network acquires and processes the first request information, to obtain the second request information, and the target transceiving node sends the second request information to the target authentication node of the network through an AMF network element.

In some embodiments, the first request information may include not only the digital identity of the terminal but also second certification information. In addition to the digital identity of the terminal, the second request information further includes first certification information and the second certification information. The second certification information (digital-id-certification-encrypted) is the first certification information after being encrypted. The first certification information and second certification information are used by the target authentication node of the network to verify the validity of the terminal. In other words, the target transceiving node of the network processes the first request information by adding the first certification information to the first request information, so as to obtain the second request information.

In S403, the target transceiving node of the network receives a network identity, used for characterizing the access authority, sent by the target authentication node of the network, and sends the network identity to the terminal.

For the S403, the transceiving node of the network sends the second request information to the target authentication node in the same network, and then may acquire the network identity issued by the target authentication node through the AMF network element, and further send the network identity characterizing the access authority to the terminal, so that the terminal may subsequently access the network.

In some embodiments, the network identity is a network identity encrypted with a public key corresponding to the digital identity of the terminal, so as to avoid information leakage problems caused by the interception of the network identity during transmission.

FIG. 5 is a flow chart of yet another access method, in accordance with some embodiments of the present disclosure. For example, the access method provided in the present disclosure may be applied to the communication system shown in FIG. 1, such as the target authentication node of the network in FIG. 1.

As shown in FIG. 5, the access method provided in the present disclosure may, for example, include the following S501 and S502.

In S501, the target authentication node of the network receives second request information sent by a target transceiving node of the network.

The second request information includes a digital identity of a terminal.

In S502, in a case where the second request information passes verification, the target authentication node of the network sends a network identity used for characterizing an access authority to the terminal through the target transceiving node of the network.

For the S501 and the S502, the target authentication node of the network may receive the second request information sent by the target transceiving node in the same network, and then perform the verification based on the digital identity of the terminal included in the second request information. In a case where the digital identity passes the verification, the target authentication node of the network determines that the terminal is valid, issues the network identity, and sends the issued network identity to the terminal through the target transceiving node of the network. In addition, the target authentication node may further correspondingly store the digital identity and network identity of the terminal.

In some embodiments, the verification for the second request information includes the following two implementation manners.

In an implementation manner, the following verification process is adopted: a) a public key of a granting authority to which the digital identity belongs is obtained; b) the digital identity is decrypted by using the public key of the granting authority, so that a public key of the digital identity is obtained; c) the second certification information is decrypted by using the public key of the digital identity, so that third certification information (digital-id-certification*) is obtained; d) in a case where the third certification information is the same as the first certification information, it is determined that the second information (access authority request information) passes the verification.

It will be understood that the digital identity is issued by a legitimate granting authority and the digital identity includes a pair of a public key and a private key. The private key is stored on the terminal side and not shared externally, while the public key may be shared with other nodes for assisting in verification. The target authentication node may acquire the public key of the granting authority by accessing a blockchain (if the digital identity of the terminal has been uploaded to the blockchain), and then perform the verification. The target authentication node may also obtain the public key of the granting authority from a preset storage space (e.g., a unified data management (UDM) network element) and then perform the verification. In this way, the verification may not only verify whether the digital identity is valid, but also authenticate whether the digital identity belongs to the terminal.

In addition, the current authentication process is based on the peer key obtained from the UDM, which means that UDM needs to serve millions of users. As a result, it is prone to cause channel congestion and a sharp increase in latency during peak hours. If the latency of the authentication process is excessively long, the entire process is required to be reinitiated. If the UDM malfunctions, the entire network will be paralyzed. The digital identity authentication method used in the present disclosure does not rely on the UDM, and most nodes in the network may verify the validity of the terminal, thereby effectively improving the stability of the communication system.

In another implementation manner, the target authentication node may query whether the digital identity has a corresponding network identity. In a case where the digital identity has a corresponding network identity, the target authentication node determines that the second request information passes the verification, and then encrypts the corresponding network identity obtained through the query and sends the encrypted network identity to the terminal. In a case where the digital identity has no corresponding network identity, the target authentication node may perform the verification process described in the implementation manner described above.

It will be understood that if the target authentication node queries that the terminal has previously applied for a network identity, the target authentication node does not need to perform the verification again, so as to reduce the waste of the computing power resources of the target authentication node.

In some embodiments, the network identity may consist of information (AUSF information) of the target authentication node granting the identity and other information such as a blockchain node number. The target authentication node may use the network identity to record information such as a phone bill of a terminal and a plan used by a terminal.

In some embodiments, the target authentication node may inform other network nodes of the network identity after generating the network identity, so that the terminal may subsequently directly access other nodes in the same network without the need for the target authentication node to generate a new network identity again. For example, the network identity may be uploaded to a blockchain in a blockchain manner, and other network nodes may access the blockchain to obtain the network identity. Alternatively, the network node may also be broadcast to other network nodes for storage in a distributed storage manner, and the embodiments of the present disclosure are not limited thereto.

It will be understood that multi-party access of the terminal may be achieved by broadcasting the network identity to other network nodes, and there is no need for the terminal to re-perform the verification when accessing other network nodes, so as to effectively improve the network access efficiency of the terminal, thereby improving the user experience.

In the access method provided in the embodiments of the present disclosure, the terminal receives the indication information of the target transceiving node of the network, and then sends the first request information including the digital identity to obtain the network identity characterizing the access authority, and uses the network identity to access the network. Since the digital identity is certified by the authoritative authority, the digital identity serves as a personal identification document for a user, ensuring that an individual may be traced based on the digital identity. In this way, the terminal needs to adopt only one digital identity, and different nodes in the network may perform authentication on the terminal based on the digital identity. In this way, there is no need for the terminal to store a plurality of identity credentials, thereby effectively reducing the possibility of identity credential leakage.

Furthermore, the terminal may achieve authentication at different network nodes and access different network nodes by using the digital identity to perform authentication, which not only avoids the risk of the paralysis of the entire network due to a single point of failure that may exist in conventional central node authentication, but also avoids the waste of storage resources and security risks caused by the terminal storing a plurality of credentials. In addition, the terminal may also authenticate the network identity issued by the network node, to ensure the validity of the network node to be accessed, thereby ensuring communication security.

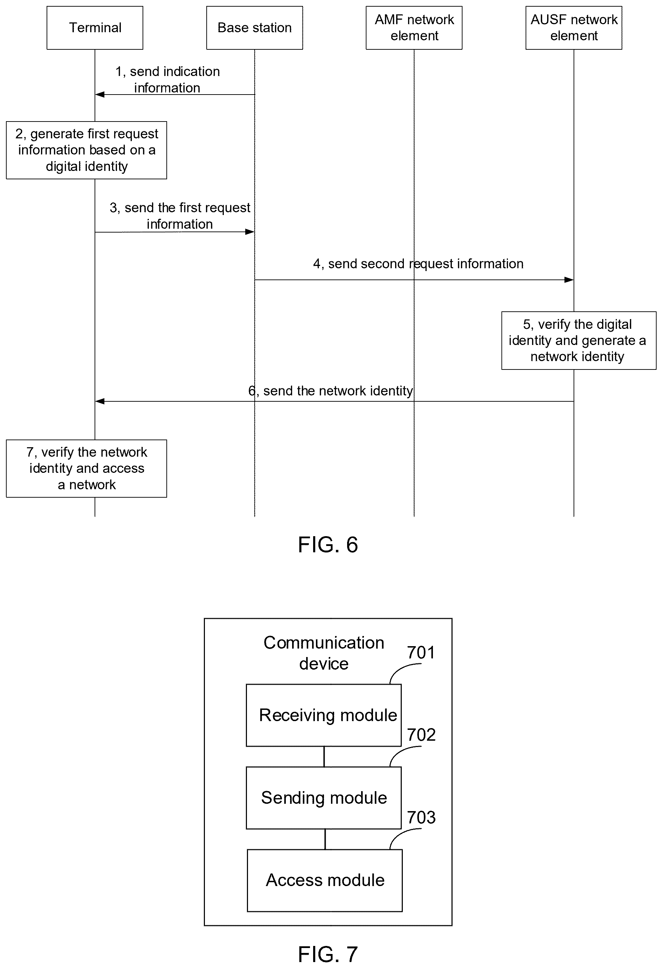

FIG. 6 is a flow chart of an interaction of an access method, in accordance with some embodiments of the present disclosure. The interaction process may be applied to a communication system, and the communication system includes a terminal, a base station (the target transceiving node of the network), an AMF network element, and an AUSF network element (the target authentication node of the network). First, the base station sends indication information to the terminal, and the terminal generates first request information carrying a digital identity and sends the first request information to the base station. The base station further generates second request information based on the first request information and sends the second request information, and then transmits the second request information to the AUSF network element through the AMF network element by means of transparent transmission. The AUSF network element verifies whether the digital identity in the second request information is valid. If the authentication is passed, the AUSF network element generates a network identity and sends the network identity to the terminal in sequence through the AMF network element and the base station. The terminal may further verify the validity of the network identity and then use the network identity to access the network.

It may be understood that, in order to achieve the functions described above, the communication device (which may be the terminal, the target transceiving node of the network, or the target authorization node of the network) includes corresponding hardware structures and/or software modules for performing a variety of functions. Those skilled in the art will easily realize that the present disclosure may be implemented in the form of hardware or a combination of hardware and computer software, with reference to the algorithm steps of the plurality of examples described in the embodiments of the present disclosure. Whether a certain function is performed by hardware or computer software-driven hardware depends on the specific application and design constraints of the technical solutions. Professional technicians may use different methods to implement the described functions, for each specific application, but such implementation will not be considered beyond the scope of the present disclosure.

In the embodiments of the present disclosure, the communication device may be divided into functional modules according to the method embodiments described above. For example, each functional module may be divided corresponding to each function, or two or more functions may be integrated into one functional module. The integrated module described above may be implemented in the form of hardware or in the form of software. It will be noted that the division of modules in the embodiments of the present disclosure is illustrative, and is merely a kind of logical functional division, and there may be other division methods in actual implementations. The description is given below by considering an example in which each functional module is divided corresponding to each function.

FIG. 7 is a schematic diagram showing a structure of a communication device, in accordance with some embodiments of the present disclosure, and the communication device may perform the access method provided in the method embodiments described above. As shown in FIG. 7, the communication device includes a receiving module 701, a sending module 702, and an access module 703.

The receiving module 701 is configured to receive indication information of a target transceiving node of a base station network. The indication information is configured to instruct a terminal to use a digital identity to request an access authority to the network on a target time-frequency resource.

The sending module 702 is configured to send first request information on the target time-frequency resource in response to the indication information. The first request information includes the digital identity of the terminal.

The receiving module 701 is further configured to receive a network identity used for characterizing the access authority.

The access module 703 is configured to access the network by using the network identity.

In some embodiments, the indication information includes first certification information. The first request information further includes second certification information, and the second certification information is the first certification information after being encrypted.

In some embodiments, the second certification information is the first certification information encrypted with a private key corresponding to the digital identity.

In some embodiments, the access module 703 is configured to, for example, verify validity of the network identity; and access, in a case where the network identity is verified as valid, the network by using the network identity.

In some embodiments, the access module 703 is configured to, for example, verify the validity of the network identity based on a target valid terminal. The target valid terminal is a terminal passing verification of the target authentication node and belonging to the terminals managed by other transceiving nodes in the network except the target transceiving node. The target authentication node is a node in the network that issues the network identity. Alternatively, the access module 703 is configured to, in a case where the target authentication node of the network has a digital identity, verify the validity of the network identity based on the digital identity of the target authentication node.

In some embodiments, the indication information is carried in system information block (SIB) signaling.

In some embodiments, the indication information is further configured to instruct the terminal to send relevant information for access. The first request information further includes the relevant information.

In some embodiments, the relevant information includes at least one of: a type of the digital identity, a content of the digital identity, information about a blockchain related to the digital identity, and a fee payment method.

In some embodiments, the received network identity is a network identity encrypted with a public key corresponding to the digital identity.

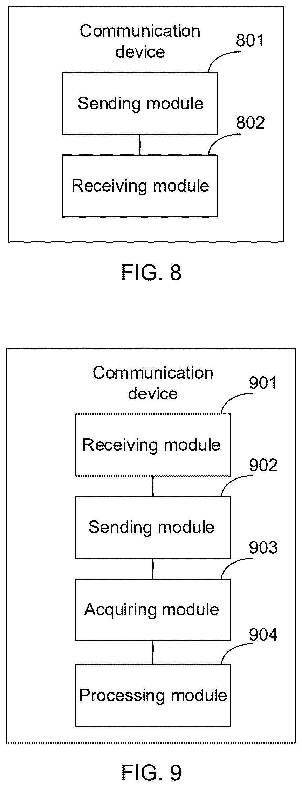

FIG. 8 is a schematic diagram showing a structure of another communication device, in accordance with some embodiments of the present disclosure, and the communication device may perform the access method provided in the method embodiments described above. As shown in FIG. 8, the communication device includes a sending module 801 and a receiving module 802.

The sending module 801 is configured to send indication information. The indication information is configured to instruct a terminal to use a digital identity to request an access authority to a network on a target time-frequency resource.

The receiving module 802 is configured to receive first request information of the terminal and send second request information to a target authentication node of the network. The first request information and second request information include the digital identity of the terminal.

The receiving module 802 is configured to receive a network identity, used for characterizing the access authority, sent by the target authentication node of the network, and send the network identity to the terminal.

In some embodiments, the indication information includes first certification information. The first request information further includes second certification information. The second certification information is the first certification information after being encrypted. The second request information further includes the first certification information and the second certification information.

In some embodiments, the second certification information is the first certification information encrypted with a private key corresponding to the digital identity.

FIG. 9 is a schematic diagram showing a structure of yet another communication device, in accordance with some embodiments of the present disclosure, and the communication device may perform the access method provided in the method embodiments described above. As shown in FIG. 9, the communication device may include a receiving module 901 and a sending module 902.

The receiving module 901 is configured to receive second request information sent by a target transceiving node of a network. The second request information includes a digital identity of a terminal.

The sending module 902 is configured to send, in a case where the second request information passes verification, a network identity used for characterizing an access authority to the terminal through the target transceiving node of the network.

In some embodiments, the second request information further includes first certification information and second certification information. The second certification information is the first certification information after being encrypted.

In some embodiments, the second certification information is the first certification information encrypted with a private key corresponding to the digital identity.

In some embodiments, the device further includes an acquiring module 903 and a processing module 904. The acquiring module 903 is configured to acquire a public key of a granting authority to which the digital identity belongs. The processing module 904 is configured to: decrypt the second certification information by using a public key of the digital identity to obtain third certification information; and determine, in a case where the third certification information is the same as the first certification information, that the second request information (access authority request information) passes the verification.

A communication system is further provided in the embodiments of the present disclosure. The communication system includes a terminal, a target transceiving node of a network, and a target authentication node of the network. The terminal is configured to perform the method described in the S201 to S204, the target transceiving node of the network is configured to perform the method described in the S401 to S403, and the target authentication node of the network is configured to perform the method described in the S501 and S502.

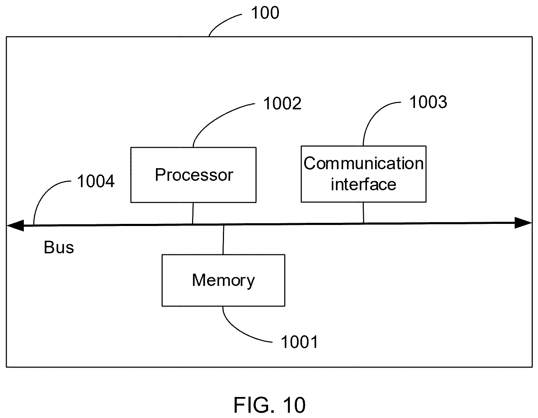

In a case where the functions of the integrated modules are implemented in the form of hardware, another structure of the communication device involved in the embodiments described above is further provided in the embodiments of the present disclosure. As shown in FIG. 10, the communication device 100 includes: a processor 1002 and a bus 1004. In some embodiments, the electronic device or communication device may further include a memory 1001. In some embodiments, the electronic device or communication device may further include a communication interface 1003.

The processor 1002 may implement or execute a variety of exemplary logical blocks, modules and circuits described with reference to the embodiments of the present disclosure. The processor 1002 may be a central processing unit, a general-purpose processor, a digital signal processor, an application specific integrated circuit, a field programmable gate array or any other programmable logic device, a transistor logic device, a hardware component, or any combination thereof. The processor 1002 may implement or execute a variety of exemplary logical blocks, modules and circuits described with reference to the embodiments of the present disclosure. The processor 1002 may also be a combination that implements computing functions, for example, a combination of one or more microprocessors, or a combination of a digital signal processor (DSP) and a microprocessor.

The communication interface 1003 is configured to connect to other devices through a communication network. The communication network may be an Ethernet, a wireless access network, a wireless local area network (WLAN), or the like.

The memory 1001 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in the form of data structure.

In an implementation manner, the memory 1001 may exist independently of the processor 1002, and the memory 1001 may be connected to the processor 1002 through the bus 1004 and used for storing instructions or program codes. When calling and executing the instructions or program codes stored in the memory 1001, the processor 1002 may achieve the access method provided in the embodiments of the present disclosure.

In another implementation manner, the memory 1001 may also be integrated with the processor 1002.

The bus 1004 may be an extended industry standard architecture (EISA) bus, or the like. The bus 1004 may be classified as an address bus, a data bus, and a control bus. For ease of representation, only one bold line is used in FIG. 10, but it does not mean that there is only one bus or one type of bus.

In some embodiments, the memory 1001 stores executable instructions. When the processor 1002 executes the executable instructions, the communication device is enabled to perform the access method as described in any one of the embodiments described above.

A computer readable storage medium (e.g., a non-transitory computer readable storage medium) is further provided in some embodiments of the present disclosure. The computer readable storage medium has stored computer program instructions. When the computer program instructions are run on a computer, the computer is enabled to perform the access method as described in any one of the embodiments described above.

For example, the computer readable storage medium may include, but is not limited to: a magnetic storage device (e.g., a hard disk, a floppy disk, or a magnetic tape), an optical disk (e.g., a compact disk (CD)), a digital versatile disk (DVD), a smart card and a flash memory device (e.g., an erasable programmable read-only memory (EPROM), a card, a stick or a key driver). The computer readable storage media described in the present disclosure may represent one or more devices and/or other machine-readable storage media for storing information. The term "machine-readable storage medium" may include, but is not limited to, wireless channels and a variety of other media capable of storing, containing, and/or carrying instructions and/or data.

A computer program product including instructions is further provided in the embodiments of the present disclosure. When the computer program product is run on a computer, the computer is enabled to perform the access method as described in any one of the embodiments described above.

In the access method provided in the embodiments of the present disclosure, the terminal receives the indication information of the target transceiving node of the network, and then sends the first request information including the digital identity to obtain the network identity characterizing the access authority, and uses the network identity to access the network. Since the digital identity is certified by the authoritative authority, the digital identity serves as a personal identification document for a user, ensuring that an individual may be traced based on the digital identity. In this way, the terminal needs to adopt only one digital identity, and different nodes in the network may perform authentication on the terminal based on the digital identity. In this way, there is no need for the terminal to store a plurality of identity credentials, thereby effectively reducing the possibility of identity credential leakage.

The above are merely specific implementation manners of the present disclosure, but the protection scope of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. An access method, applied to a terminal, comprising:
receiving indication information of a target transceiving node of a network; the indication information being configured to instruct the terminal to use a digital identity to request an access authority to the network on a target time-frequency resource;
sending first request information on the target time-frequency resource in response to the indication information; the first request information including the digital identity of the terminal;
receiving a network identity used for characterizing the access authority; and
accessing the network by using the network identity.

2. The method according to claim 1, wherein the indication information includes first certification information, the first request information further includes second certification information, and the second certification information is the first certification information after being encrypted.

3. The method according to claim 2, wherein the second certification information is the first certification information encrypted with a private key corresponding to the digital identity.

4. The method according to claim 1, wherein the accessing the network by using the network identity, includes:
verifying validity of the network identity; and
accessing, in a case where the network identity is verified as valid, the network by using the network identity.

5. The method according to claim 4, wherein the verifying validity of the network identity, includes:
verifying validity of the network identity based on a target valid terminal; wherein the target valid terminal is a terminal passing verification of a target authentication node and belonging to terminals managed by other transceiving nodes in the network except the target transceiving node; the target authentication node is a node in the network that issues the network identity; or
verifying, in a case where the target authentication node of the network has a digital identity, validity of the network identity based on the digital identity of the target authentication node.

6. The method according to claim 1, wherein the indication information is carried in system information block (SIB) signaling.

7. The method according to claim 1, wherein the indication information is further configured to instruct the terminal to send relevant information for access; the first request information further includes the relevant information.

8. The method according to claim 7, wherein the relevant information includes at least one of: a type of the digital identity, a content of the digital identity, information about a blockchain related to the digital identity, and a fee payment method.

9. The method according to claim 1, wherein the received network identity is a network identity encrypted with a public key corresponding to the digital identity.

10. An access method, applied to a target transceiving node of a network, comprising:
sending indication information; the indication information being configured to instruct a terminal to use a digital identity to request an access authority to the network on a target time-frequency resource;
receiving first request information of the terminal and sending second request information to a target authentication node of the network; the first request information and the second request information including the digital identity of the terminal; and
receiving a network identity, used for characterizing the access authority, sent by the target authentication node of the network, and sending the network identity to the terminal.

11. The method according to claim 10, wherein the indication information includes first certification information; the first request information further includes second certification information; the second certification information is the first certification information after being encrypted; the second request information further includes the first certification information and the second certification information.

12. The method according to claim 11, wherein the second certification information is the first certification information encrypted with a private key corresponding to the digital identity.

13. An access method, applied to a target authentication node of a network, comprising:
receiving second request information sent by a target transceiving node of the network; the second request information including a digital identity of a terminal; and
sending by the target authentication node of the network, in a case where the second request information passes verification, a network identity used for characterizing an access authority to the terminal through the target transceiving node of the network.

14. The method according to claim 13, wherein the second request information further includes first certification information and second certification information; the second certification information is the first certification information after being encrypted.

15. The method according to claim 14, wherein the second certification information is the first certification information encrypted with a private key corresponding to the digital identity.

16. The method according to claim 13, further comprising:
acquiring a public key of a granting authority to which the digital identity belongs;
decrypting the digital identity by using the public key of the granting authority, to obtain a public key of the digital identity;
decrypting second certification information by using the public key of the digital identity, to obtain third certification information; and
determining, in a case where the third certification information is the same as first certification information, that the second request information passes the verification.

17. The method according to claim 13, further comprising:
querying whether the digital identity has a corresponding network identity; and
determining, in a case where the digital identity has the corresponding network identity, that the second request information passes the verification.

18. The method according to claim 13, wherein the network identity is a network identity encrypted with a public key corresponding to the digital identity.

19. A communication device, comprising: a processor and a memory for storing instructions executable by the processor;
wherein the processor is configured to perform the instructions to enable the communication device to perform the access method according to any one of claims 1 to 18.

20. A computer readable storage medium, wherein the computer readable storage medium has stored computer instructions that, upon being run on a communication device, enable the communication device to perform the access method according to any one of claims 1 to 18.
